# FASCICULE DE BREVET EUROPEEN

(11) **EP 0 788 458 B1**
(45) Date de publication et mention de la délivrance du brevet: **16.12.1998**
(21) Numéro de dépôt: 95936596.6
(22) Date de dépôt: 24.10.1995
(51) Int. Cl.: C01B 13/02, A23L 3/3544, A23L 3/3526, C09K 15/32

(54) **PROCEDE DE DISMUTATION CATALYTIQUE DES HYDROPEROXYDES ET PEROXYDES DANS LES MILIEUX AQUEUX**
VERFAHREN ZUR KATALYTISCHEN DISMUTIERUNG VON HYDROPEROXIDEN UND PEROXIDEN IN WÄSSRIGEN MEDIEN
METHOD FOR THE CATALYTIC DISPROPORTIONATION OF HYDROPEROXIDES AND PEROXIDES IN AQUEOUS MEDIA

(30) Priorité: 24.10.1994 FR 9412694
(43) Date de publication de la demande: 13.08.1997
(73) Titulaire: ELF AQUITAINE, 92400 Courbevoie (FR)
(72) Inventeur: FRAISSE, Laurent, F-64110 Saint-Faust (FR); SERIS, Jean-Louis, F-64110 Jurançon (FR); RABION, Alain, F-17210 Montlieu-la-Garde (FR); DELROISSE, Michel, F-34360 Saint-Chinian (FR); VERLHAC, Jean-Baptiste, F-33400 Talence (FR)
(74) Mandataire: Boillot, Marc
(86) Numéro de dépôt international: FR9501401
(87) Numéro de publication internationale: WO9612672

(56) Documents cités:
- INORGANIC CHEMISTRY, vol. 17, no. 112, 1978 EASTON US, pages 3366-3370, M. BARTERI ET AL. 'Configurational effect of iron(III) complex ions in the disproportionation of hydrogen peroxide'
- JOURNAL OF THE AMERICAN CHEMICAL SOCIETY, vol. 90, no. 16, Juillet 1968 DC US, pages 4476-4478, 'Catalytic decomposition of hydrogen peroxide by copper chelates and mixed ligand complexes of histamine in the presence of phosphate buffer in the neutral pH region'
- JOURNAL OF THE AMERICAN CHEMICAL SOCIETY, vol. 116, 1994 DC US, pages 898-903, P. J. PESSIKI, G. C. DISMUKES 'Structural and functional models of the dimanganes catalase enzymes. 3. Kinetics and mechanism of hydrogen peroxide dismutation' cité dans la demande

## Description

La présente invention vise un procédé de dismutation catalytique des hydroperoxydes et du peroxyde d'hydrogène en milieux aqueux, à pH neutre.

La connaissance d'un tel procédé est particulièrement importante et nécessaire pour lutter contre les phénomènes de dégénérescence cellulaire dans l'organisme dus à la présence d'espèces oxygénées réactives comme le peroxyde d'hydrogène obtenu lors de la réduction des anions superoxydes et de l'oxygène diatomique. Pour limiter la concentration de ces espèces oxygénées réactives, il est connu d'utiliser certaines enzymes de protection qui accélèrent fortement la vitesse de décomposition du peroxyde d'hydrogène en eau et oxygène sans passer par des espèces intermédiaires oxydantes, notamment des espèces résultant de la réaction de FENTON.

Comme la stabilité de ces enzymes est limitée, on s'est intéressé à reproduire leurs fonctions actives dans la réaction de dismutation du peroxyde d'hydrogène. Par analogie, on a donc sélectionné des composés chimiques de structures voisines du site catalytique de ces enzymes.

Comme certaines enzymes connues pour leur action préventive des phénomènes de stress oxydatif présentent des sites actifs constitués d'ions manganèses complexés par des résidus carboxylates ou imidazoles d'acides aminés, des complexes au manganèse obtenus à partir de ligands présentant des résidus aminés ou de type pyridine ou de type imidazole ont de préférence été étudiés.

Parmi ces complexes, on trouve les complexes bimétalliques du manganèse coordonnés à des ligands bidentates de type bipyridine (bpy) tels que décrits par P.A.Goodson,J.Glerup, D.J.Hodgson, K.Michelsen et E.Petersen dans Inorg. Chem., 1990, 29, 503-508, et reliés l'un à l'autre par des pontages oxygène et acétate. Les auteurs ont notamment souligné l'existence d'espèces bimétalliques de valence III/III, III/IV et IV/IV selon le milieu solvant, le pH et le potentiel d'oxydoréduction du milieu.

D'autres complexes ont été obtenus à partir de ligands tétradentates comme le N,N,N',N' tetrakis-(2-méthylènebenzimidazolyl)-1,3 diaminopropane-2-ol qui se coordonne aux deux atomes de manganèse par six de ses atomes d'azote (P.J.Pessiki et G.C.Dismukes, J. Am. Chem. Soc.,1994, 116, 898-903) et pour lesquels les atomes métalliques sont de façon comparable aux complexes précédents, de valence variable.

Parallèlement, R.Manchanda, H.H.Thorp, G.W.Gary et R.H.Crabtree (Inorg. Chem. 1991, 30 494-497) ont étudiés les propriétés d'oxydoréduction d'un complexe bimétallique du manganèse [Mn₂(bispicen)₂(µ-oxo)₂]³⁺, le ligand bispicen correspondant à la N,N'-bis(2-méthylpyridinyl)-1,2-éthylènediamine, en solution dans l'eau et en présence d'un sel de fond, ici du perchlorate de sodium. Ses dérivés tels que le complexe Mn₂[bispicen(NMe₂)]₂(µ-oxo)₂]^{3+, ont été} étudiés sous forme cristallisée en présence de perchlorate de sodium comme agent de précipitation par J.Glerup, P.A.Goodson, A.Hazell, R.Hazell, D.J.Hodgson, C.J.McKenzie, K.Michelsen, U.Rychlewska et H.Toftlund (Inorg. Chem. 1994,33, 4105-4111).

Cependant, si nombre de complexes du manganèse aux ligands comprenant des espèces azotées ont été étudiés sur le plan de la structure cristalline et de la stabilité dans divers milieux solvants, jusqu'à présent, peu d'entre eux ont été testés comme catalyseur de dismutation du peroxyde d'hydrogène.

Ainsi, les complexes tétradentates de Pessiki et G.C.Dismukes (J. Am. Chem. Soc.,1994, 116, 898-903) dismutent de façon suffisamment rapide le peroxyde d'hydrogène ce qui souligne leur bonne efficacité catalytique au regard de cette réaction. Mais, s'ils sont efficaces en milieux bi-solvant eau/alcool ou eau/acétate, ils sont peu stables aux concentrations recherchées en milieu purement aqueux à pH neutre, c'est-à-dire en milieu comparable à celui de l'organisme où leur action contre les réactions de stress oxydatif est vitale.

La présente invention vise donc un procédé général de dismutation des hydroperoxydes et du peroxyde d'hydrogène en milieu aqueux à pH 7, au moyen d'un catalyseur nouveau ayant un pouvoir de dismutation très supérieur à ceux obtenus antérieurement mettant en oeuvre certains des complexes azotés du manganèse. Ce catalyseur devra pouvoir être appliqué non seulement aux faibles concentrations mais aussi aux fortes concentrations de peroxydes d'hydrogène notamment pour les traitements d'eaux de rejet industrielles.

La présente invention a donc pour objet un procédé de dismutation en milieu aqueux à pH neutre des hydroperoxydes et de peroxyde d'hydrogène catalysé par des complexes d'ions manganèse caractérisé en ce qu'il consiste à mettre en contact dans l'eau, à température comprise entre 10 et 60°C en présence d'un tampon de pH neutre, lesdits hydrogènoperoxydes et/ou le peroxyde d'hydrogène avec au moins un complexe du manganèse soluble dans l'eau de formule (I) suivante;

[(LMn)ₓ O_{y}]^{z+}_{zX}⁻ (I)

dans laquelle:
x, y et z sont des nombres entiers supérieurs à 1, Mn représente le manganèse, O l'oxygène, X un contre-ion du groupe constitué par les chlorates, les perchlorates, les perborates, les persulfates et les hexafluorosulfates et L un ligand de formule (II) ci-après: 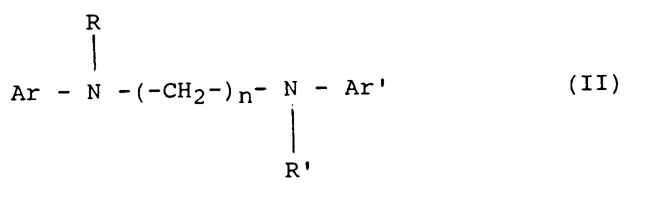
avec n un nombre entier compris entre 2 et 6, R et R' choisis dans le groupe constitué par l'hydrogène, les groupements alkyls linéaires ou ramifiés comprenant de 1 à 6 atomes de carbones, Ar et Ar', identiques ou différents comprenant des chaînes carbonées comportant des groupements hétérocycliques insaturés contenant au moins un atome d'azote.

Pour réaliser l'invention, les tampons de pH neutre sont choisis dans le groupe constitué par le tampon Tris/HCl obtenu à partir du tris(hydroxyméthyl)aminométhane neutralisé par l'acide chlorhydrique, le tampon Hépès obtenu à partir d'acide N-[2-hydroxyéthyl]pipérazine-N'-[2-éthanesulphonique] et le tampon phosphate obtenu à partir d'hydrogènophosphates alcalins.

Pour un maximum d'activité, on préfèrera un tampon neutre d'hydrogènophosphate alcalin, de préférence de sodium ou de potassium, qui améliore la stabilité du complexe nécessaire à l'invention. On a constaté un effet de synergie inattendu entre le tampon et le complexe qui peut s'expliquer par des pontages de l'anion du dit tampon entre deux atomes de manganèse dudit complexe.

Dans un mode préféré de l'invention, les ligands comprendront des groupements Ar et Ar' contenant au moins un cycle aromatique contenant au moins un atome d'azote.

Parmi les cycles aromatiques répondant à cette spécification, nous trouvons en particulier les cycles imidazolyls et pyridiniques, ceux-ci pouvant être substitués ou non par divers groupements.

Les complexes obtenus à partir de ces cycles sont des complexes du manganèse raccordés aux ligands par au moins deux et de préférence quatre atomes d'azote, chaque atome d'azote étant séparés par une chaîne carbonée comprenant au moins deux atomes de carbone.

Dans un mode préféré de réalisation de l'invention, les groupements Ar et Ar' de la formule (I) sont identiques ou différents et peuvent avoir la formule (III) ci-après: 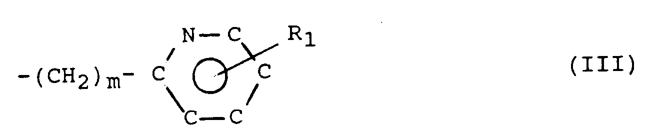 dans laquelle m et m' respectivement dans Ar et Ar' sont des nombres entiers identiques ou différents compris entre 1 et 4, R₁ et R₁', substitués à un hydrogène d'un des atomes de carbone de chaque cycle dans Ar et Ar', sont choisis dans le groupe constitué par l'atome d'hydrogène, les groupements alkyl comprenant de 1 à 4 atomes de carbone, les groupements oxyalkyl comprenant de 1 à 6 atomes de carbone, les halogénures, de préférence le chlore, et les groupes nitro.

On ne sortirait pas du cadre de l'invention, si aux cycles pyridiniques des groupements Ar et Ar', on substituait des quinoléïnes substituées ou non par des groupements alkyls et/ou oxyalkyls, des halogénures ou des groupes nitro.

Dans ce mode de réalisation de l'invention, le ligand préféré selon la formule (II) est tel que n est égal à 2, R et R' sont des groupements méthyls et dans Ar et Ar', m et m' sont égaux à 1 et, R₁ et R₁' sont des groupements alkyl comprenant de préférence au plus deux atomes de carbone.

Dans un autre mode de réalisation de l'invention, les groupements Ar et Ar' dans le ligand de formule (I) correspondent à au moins une des formules (IV) ou (V) décrites ci-après: 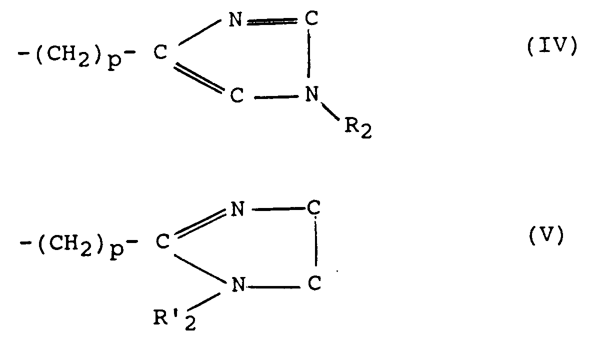 dans laquelle p et p' respectivement pour Ar et Ar' sont des nombres entiers identiques ou différents compris entre 1 et 6, R₂ et R₂' sont l'atome d'hydrogène ou un groupement alkyl comprenant de 1 à 3 atomes de carbone, un atome d'halogène, de préférence un atome de chlore ou un groupe nitro.

On ne sortirait pas du cadre de l'invention, si on substituait dans Ar et Ar' au groupement imidazolyl un groupement benzimidazolyl substitué ou non par des groupements alkyls comprenant de 1 à 3 atomes de carbone.

Dans cet autre mode préféré de l'invention on peut choisir avantageusement des ligands de formule (I) pour lesquels n est égal à 2, R et R' sont un hydrogène, un méthyl ou un éthyl, et dans Ar et Ar' de formules (IV) et (V), p et p' sont égaux à 1, et R₂ et R₂' sont l'hydrogène ou un méthyl.

Dans le cadre de la présente invention, le complexe du manganèse, peut être préparé en solution dans l'eau ou encore fixé sur un support soluble ou non.

Selon l'invention, pour une activité optimale du complexe, le rapport des concentrations molaires du dit complexe du manganèse sur la concentration en tampon phosphate est inférieur à 1.

Un tel procédé peut être avantageusement appliqué pour limiter les réactions de stress oxydatif de l'organisme par voie de médicaments, pour limiter les réactions d'oxydation dans les denrées alimentaires mais aussi pour traiter les eaux fortement concentrées en hydroperoxydes et peroxyde d'hydrogène, notamment les eaux de rejet industrielles.

Les exemples donnés ci-après visent à illustrer l'invention et ses nombreux avantages sans toutefois en limiter la portée.

### EXEMPLE 1:

Le présent exemple vise à souligner l'effet de synergie entre les complexes selon l'invention et le tampon phosphate comparé aux autres tampons de pH neutre vis-à-vis de la réaction de dismutation du peroxyde d'hydrogène.

L'activité de dismutation se mesure par le suivi simultané de la production d'oxygène et de la consommation du peroxyde d'hydrogène. Cette connaissance permet d'accéder à la stoechiométrie de la réaction de disparition du peroxyde d'hydrogène. Dans le cas de la dismutation, la stoechiométrie est de 2 moles de peroxyde d'hydrogène consommé pour une mole d'oxygène produite.

La production d'oxygène est mesurée au moyen d'une électrode de Clarke, de principe connu en soi, qui détecte la teneur en oxygène dissout en milieu aqueux, dans une chambre d'incubation isolée de l'air.

On mesure la quantité de peroxyde d'hydrogène présente dans un prélèvement par oxydation enzymatique de l'acide 3,5-dichloro-2-hydroxybenzène sulfonique ou DCHBS. Les radicaux issus de cette oxydation réagissent avec la 4-aminoantipyrine ou 4-AAP pour donner un produit chromophore détectable par spectrophotométrie. L'enzyme utilisée est la peroxydase du raifort ou HRP. Pour cette mesure, le prélèvement contenant le peroxyde à doser, dilué au besoin à une concentration inférieure à 40 µM, est ajoutée à 3 ml d'une solution aqueuse de tampon phosphate 0.1M, de DCHBS 1mM, de 4-AAP 250 µM, et de 20 unités/ml de HRP. La solution ainsi obtenue a un pH de 7.5 à 8 et est maintenue à une température de 30°C pendant 10 mn pour incubation. Après cette incubation, son absorbance est mesurée au spectrophotomètre (BECKMAN type DU60) à 512 nm ; une absorbance de 25000 cm⁻¹ correspond à une concentration de peroxyde d'hydrogène ou H₂O₂ présent de 1M.

Des échantillons de deux complexes selon l'invention, de concentration de l'ordre de 2mM, ont été préparés ; ce sont le [Mn₂[bispicen(NMe₂)]₂(µ-oxo)₂]³⁺ et le [Mn₂[(1-Me)bisim]₂(µ-oxo)₂]³⁺, le bispicen correspondant au ligand N,N'-bis(2-méthylpyridinyl)-1,2-éthylènediamine et le bisim au ligand N,N'-bis(imidazolyl)-1,2-éthylènediamine. Cette préparation consiste à mélanger 1.1 équivalent de ligand en solution dans l'eau bi-distillée à un équivalent de chlorure de manganèse(II).

Pour tester l'effet des divers tampons de pH neutre, nous avons constitué six échantillons E₁, E₂, E₃, E₄, E₅ et E₆ afin de tester trois tampons en présence de ces deux complexes (le détail est donné dans le tableau I donné ci-après). Pour tester chaque échantillon, on procèdera comme suit.

On introduit dans 1 ml de solution tampon 50 mM de pH 7.5 placé dans une enceinte fermée équipée d'une électrode de Clark, quelques microlitres d'une solution concentrée de peroxyde d'hydrogène de manière à obtenir une concentration finale de 400 µM. On élimine l'oxygène dissout dans le milieu en faisant barboter de l'azote suffisamment longtemps dans la solution. On ajoute alors à la solution désoxygénée, quelques microlitres de la solution de complexe selon l'invention de façon à obtenir une concentration finale de manganèse égale à 20 µM. On mesure alors au moyen de l'électrode, l'apparition d'oxygène en continu. Des valeurs obtenues, on déduit la quantité d'oxygène due à la dismutation spontanée du peroxyde d'hydrogène dans le tampon en l'absence du complexe, valeur relativement faible à ce pH. Des prélèvements pourront être périodiquement faits pour suivre la concentration en peroxyde d'hydrogène au cours de la réaction de dismutation.

Le tableau I ci-après donne à la fois la composition des échantillons testés mais aussi les activités de dismutation du peroxyde d'hydrogène.

**TABLEAU 1**

| Echantillon | Ligand | Tampon | Activité (M⁻¹s⁻¹) |
|---|---|---|---|
| E1 | Bispicen (NMe)₂ | Tris/HCl | 26 |
| E2 | Bispicen (NMe)₂ | Hepes | 167 |
| E3 | Bispicen (NMe)₂ | Phosphate | 238 |
| E4 | 1 Me bisim | Tris/HCl | 75 |
| E5 | 1 Me bisim | Hepes | 210 |
| E6 | 1 Me bisim | Phosphate | 1088 |

On constate que l'activité des complexes varient avec la nature du complexe, ce qui montre que le tampon n'a donc pas seulement une fonction d'ajustement du pH mais il peut participer à la réaction en réagissant de façon synergique avec le complexe. Les meilleures activités sont obtenues avec un tampon phosphate.

### EXEMPLE 2:

Le présent exemple vise à montrer l'efficacité toute particulière des composés selon l'invention obtenus à partir de ligands tétradentates de type bispicen ou encore bisim comparé à des ligands azotés de structure plus simple.

On a préparé des échantillons de complexes de divers composés dont plusieurs complexes selon l'invention et testé leur activité catalytique au moyen d'une électrode à oxygène tel que décrit dans l'exemple 1. Les activités mesurées et les conditions de préparation de ces échantillons sont rassemblés dans le tableau 2 ci-après.

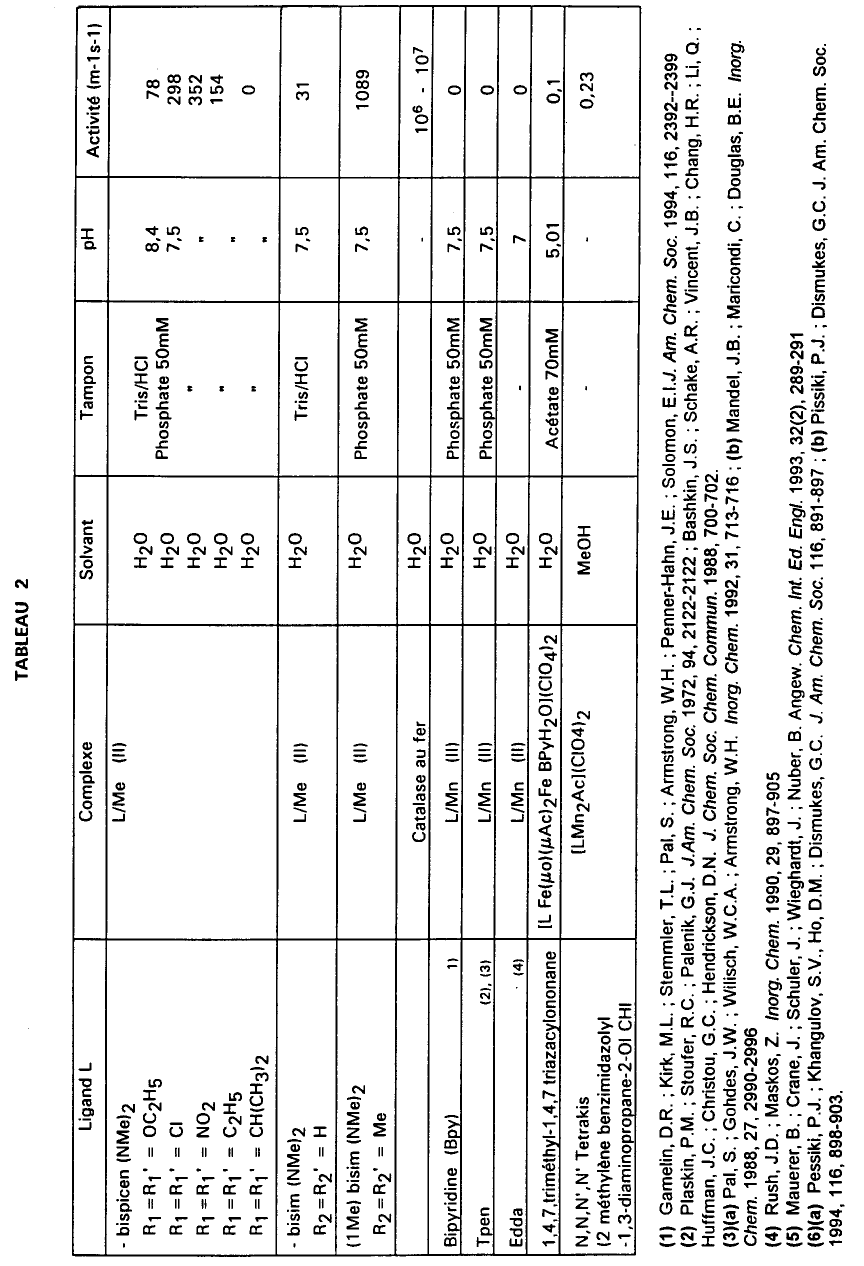

On constate que les complexes selon l'invention en présence de tampons phosphate ont des activités largement supérieures à ceux de l'art antérieur. Cependant, ils présentent toujours une moins grande activité par rapport aux catalases naturelles.

## Revendications

1. Procédé de dismutation des peroxydes et hydroperoxydes en milieu aqueux à pH neutre catalysé par des complexes du manganèse caractérisé en ce que qu'il consiste à mettre en contact dans l'eau, à température comprise entre 10 et 60°C en présence d'un tampon de pH neutre, lesdits hydrogènoperoxydes et/ou le peroxyde d'hydrogène avec au moins un complexe du manganèse soluble dans l'eau de formule (I) suivante :
[(LMn)ₓ Oy]^{z+}_{zX}⁻ (I)
dans laquelle:
x, y et z sont des nombres entiers supérieurs à 1, Mn représente le manganèse, O l'oxygène, X un contre-ion du groupe constitué par les chlorates, les perchlorates, les perborates, les persulfates et les hexafluorosulfates et L un ligand de formule (II) ci-après : 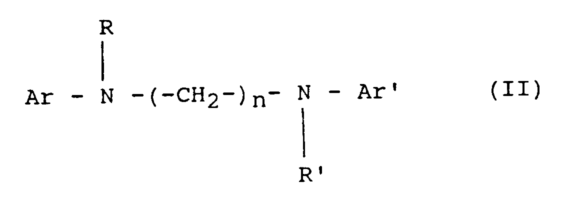
avec n un nombre entier compris entre 2 et 6, R et R' choisis dans le groupe constitué par l'hydrogène, les groupements alkyls linéaires ou ramifiés comprenant de 1 à 6 atomes de carbones, et Ar et Ar', identiques ou différents, comprenant des chaînes carbonées comportant des groupements hétérocycliques insaturés identiques ou différents, contenant au moins un atome azoté.

2. Procédé selon la revendication 1 caractérisé en ce que les tampons de pH neutre sont choisis dans le groupe constitué par le tampon Tris/HCl obtenu à partir du tris(hydroxyméthyl)aminométhane neutralisé par l'acide chlorhydrique, le tampon Hépès obtenu à partir d'acide N-[2-hydroxyéthyl]pipérazine-N'-[2-éthanesulphonique] et le tampon phosphate obtenu à partir d'hydrogènophosphates alcalins.

3. Procédé selon l'une des revendications 1 et 2 caractérisé en ce que les tampons neutres préférés sont obtenus à partir d'hydrogénophosphates de sodium et de potassium.

4. Procédé selon l'une des revendications 1 à 3 caractérisé en ce que les groupements hétérocycliques Ar et Ar' contiennent au moins un cycle aromatique comprenant au moins un atome d'azote.

5. Procédé selon l'une des revendications 1 à 4 caractérisé en ce que les cycles aromatiques dans Ar et Ar' contiennent au moins un cycle du groupe constitué par les cycles imidazolyl et benzimidazolyl.

6. Procédé selon l'une des revendications 1 à 4 caractérisé en ce que les cycles aromatiques dans Ar et Ar' contiennent au moins un cycle du groupe constitué par les cycles pyridiniques et quinoléïques.

7. Procédé selon l'une des revendications de 1 à 6 caractérisé en ce que chaque ligand L est raccordé au manganèse par au moins deux et, de préférence quatre atomes d'azote, chaque atome d'azote étant séparés par une chaîne carbonée comprenant au moins deux atomes de carbone.

8. Procédé selon l'une des revendications de 1 à 4 et 6 à 7 caractérisé en ce que dans le ligand de formule (II), Ar et Ar' correspondent à la formule (III) ci-après : 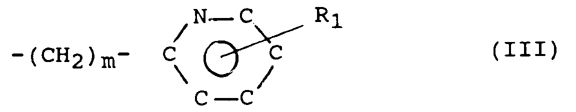 dans laquelle m et m' respectivement dans Ar et Ar' sont des nombres entiers identiques ou différents compris entre 1 et 4, R₁ et R₁', substitués à au moins un hydrogène d'un des atomes de carbone de chaque cycle dans Ar et Ar', sont choisis dans le groupe constitué par l'atome d'hydrogène, les groupements alkyl comprenant de 1 à 4 atomes de carbone, les groupements oxyalkyl comprenant de 1 à 6 atomes de carbone, les halogénures, de préférence le chlore, et les groupes nitro.

9. Procédé selon l'une des revendications 1 à 4 et 6 à 8 caractérisé en ce que dans le ligand de formule (II) n est égal à 2, R et R' sont des groupements méthyls et dans la formule (III) de Ar et Ar', m et m' sont égaux à 1, et, R1 et R1' sont des groupements alkyls comprenant au plus deux atomes de carbone.

10. Procédé selon l'une des revendications 1 à 5 et 7 caractérisé en ce que dans le ligand de formule (I) les groupements Ar et Ar' correspondent à au moins une des formules (IV) et (V) ci-après : 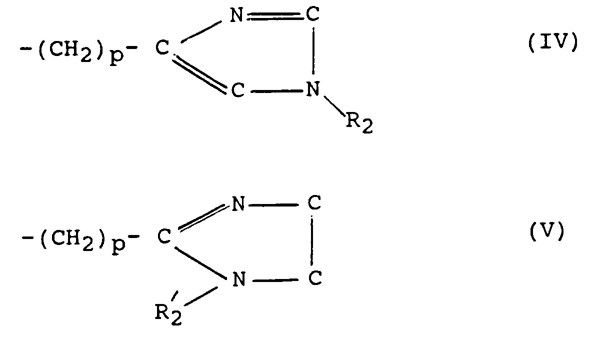 dans laquelle p et p' respectivement pour Ar et Ar' sont des nombres entiers identiques ou différents compris entre 1 et 6, R₂ et R₂' sont l'atome d'hydrogène, un groupement alkyl comprenant de 1 à 3 atomes de carbone, un atome d'halogène, de préférence un atome de chlore ou un groupe nitro.

11. Procédé selon l'une des revendications de 1 à 5, 7 et 10 caractérisé en ce que dans le ligand de formule (I), n est égal à 2, R et R' identiques ou différents sont un atome d'hydrogène, un méthyl ou un éthyl, et dans Ar et Ar', p et p' sont égaux à 1, et R₂ et R'₂ identiques ou différents, sont l'hydrogène ou un méthyl.

12. Procédé selon l'une des revendications 1 à 11 caractérisé en ce que le complexe du manganèse est préparé en solution dans l'eau ou fixé sur un support.

13. Procédé selon l'une des revendications de 1 à 12 caractérisé en ce que le rapport des concentrations molaires du complexe de manganèse sur la concentration en tampon phosphate est inférieur à 1.

14. Application du procédé selon l'une des revendications 1 à 13 pour limiter les réactions de stress oxydatif de l'organisme par voie de médicaments.

15. Application selon l'une des revendications 1 à 13 pour limiter l'oxydation des denrées alimentaires.

16. Application selon l'une des revendications 1 à 13 au traitement des eaux fortement concentrées en hydroperoxydes et peroxydes d'hydrogène, notamment des eaux de rejets industrielles.

## Claims

1. Process for the dismutation of peroxides and hydroperoxides in an aqueous medium having a neutral pH catalysed by manganese complexes, characterised in that it consists in bringing into contact in water, at a temperature of between 10 and 60°C in the presence of a buffer having a neutral pH, said hydrogen peroxides and/or the hydrogen peroxide with at least one water-soluble manganese complex of formula (I) below:
[(LMn)ₓ Oy]^{z+}_{zX}⁻ (I)
wherein:
x, y and z are whole numbers greater than 1, Mn represents manganese, O oxygen, X a counter-ion from the group formed by the chlorates, perchlorates, perborates, persulphates and hexafluorosulphates and L a ligand of formula (II) below: 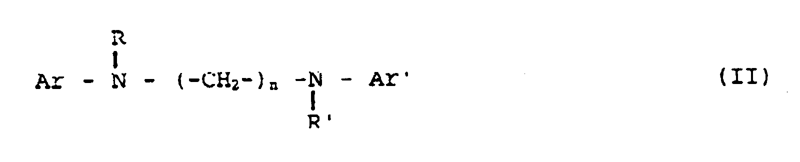
n being a whole number between 2 and 6, R and R' being selected from the group formed by hydrogen linear or branched alkyl groups comprising from 1 to 6 carbon atoms, and Ar and Ar', which are identical or different, comprising carbon-containing chains comprising identical or different unsaturated heterocyclic groups containing at least one nitrogen atom.

2. Process according to claim 1, characterised in that the buffers having a neutral pH are selected from the group formed by the buffer tris/HCl obtained from tris(hydroxymethyl)aminomethane neutralised by hydrochloric acid, the HEPES buffer obtained from N-[2-hydroxyethyl]-piperazine-N'-[2-ethanesulphonic] acid and the phosphate buffer obtained from alkali hydrogen phosphates.

3. Process according to either claim 1 or claim 2, characterised in that the preferred neutral buffers are obtained from sodium and potassium hydrogen phosphates.

4. Process according to any one of claims 1 to 3, characterised in that the heterocyclic groups Ar and Ar' contain at least one aromatic ring comprising at least one nitrogen atom.

5. Process according to any one of claims 1 to 4, characterised in that the aromatic rings in Ar and Ar' contain at least one ring from the group formed by the imidazolyl and benzimidazolyl rings.

6. Process according to any one of claims 1 to 4, characterised in that the aromatic rings in Ar and Ar' contain at least one ring from the group formed by the pyridine and quinoline rings.

7. Process according to any one of claims 1 to 6, characterised in that each ligand L is connected to the manganese by at least two, and preferably four, nitrogen atoms, each nitrogen atom being separated by a carbon-containing chain comprising at least two carbon atoms.

8. Process according to any one of claims 1 to 4 and 6 and 7, characterised in that, in the ligand of formula (II), Ar and Ar' correspond to formula (III) below: 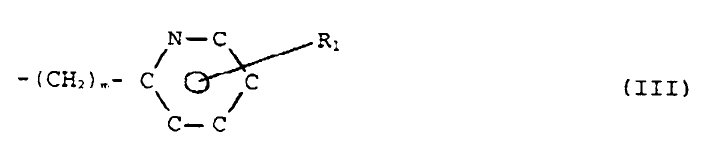 wherein m and m' in Ar and Ar', respectively, are identical or different whole numbers between 1 and 4, R₁ and R₁', substituted for at least one hydrogen of one of the carbon atoms of each ring in Ar and Ar', are selected from the group formed by hydrogen, alkyl groups comprising from 1 to 4 carbon atoms, oxyalkyl groups comprising from 1 to 6 carbon atoms, halides, preferably chlorine, and nitro groups.

9. Process according to any one of claims 1 to 4 and 6 to 8, characterised in that, in the ligand of formula (II), n is equal to 2, R and R' are methyl groups and, in the formula (III) of Ar and Ar', m and m' are equal to 1 and R₁ and R₁' are alkyl groups comprising a maximum of two carbon atoms.

10. Process according to any one of claims 1 to 5 and 7, characterised in that, in the ligand of formula (I), the groups Ar and Ar' correspond to at least one of the formulae (IV) and (V) below: 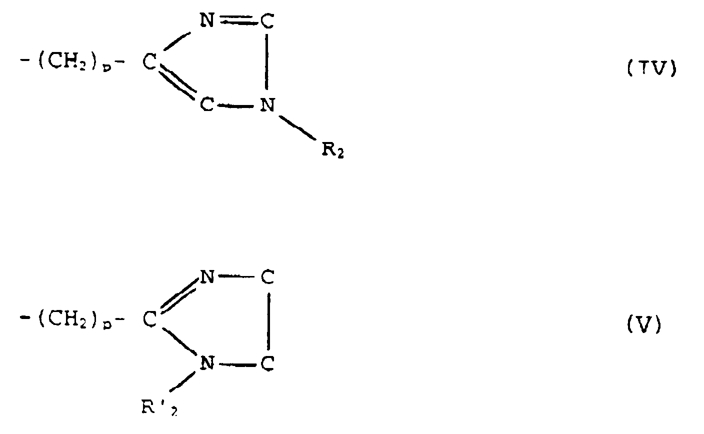 wherein p and p' for Ar and Ar', respectively, are identical or different whole numbers between 1 and 6, R₂ and R₂' are hydrogen, an alkyl group comprising from 1 to 3 carbon atoms, a halogen atom, preferably a chlorine atom, or a nitro group.

11. Process according to any one of claims 1 to 5, 7 and 10, characterised in that, in the ligand of formula (I), n is equal to 2, R and R', which are identical or different, are hydrogen, a methyl or an ethyl, and, in Ar and Ar', p and p' are equal to 1, and R₂ and R'₂, which arc identical or different, are hydrogen or a methyl.

12. Process according to any one of claims 1 to 11, characterised in that the manganese complex is prepared in solution in water or attached to a support.

13. Process according to any one of claims 1 to 12, characterised in that the quotient of the molar concentrations of the manganese complex over the concentration of phosphate buffer is less than 1.

14. Application of the process according to any one of claims 1 to 13 in order to limit the oxidative stress reactions of the organism by means of medicaments.

15. Application according to any one of claims 1 to 13 in order to limit the oxidation of foodstuffs.

16. Application according to any one of claims 1 to 13, for the treatment of waters containing high concentrations or hydroperoxides and hydrogen peroxides, particularly industrial waste waters.

## Patentansprüche

1. Verfahren der Dismutation von Peroxiden und Hydroperoxiden im wäßrigen Medium bei neutralem pH, katalysiert durch Mangankomplexe, dadurch **gekennzeichnet**, daß es darin besteht, daß man in Wasser bei einer Temperatur zwischen 10 und 60°C in Anwesenheit eines Puffers mit neutralem pH die Hydroperoxide und/oder das Wasserstoffperoxid mit wenigstens einem in Wasser löslichen Mangankomplex der Formel I
[(LMn)ₓ Oy]^{z+}zX⁻ (I)
in Berührung bringt, worin x, y und z ganze Zahlen von über 1, Mn Mangan, O Sauerstoff, X ein Gegenion der Gruppe, bestehend aus Chloraten, Perchloraten, Perboraten, Persulfaten und Hexafluorsulfaten, und L einen Liganden der Formel II 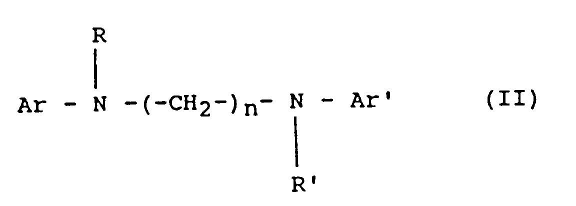 bedeuten, wobei n für eine ganze Zahl zwischen 2 und 6 steht, R und R' ausgewählt sind aus der Gruppe, bestehend aus Wasserstoff, unverzweigten oder verzweigten Alkylgruppen mit 1 bis 6 C-Atomen und Ar und Ar' gleich sind oder unterschiedliche Bedeutung haben und Kohlenstoffketten mit wenigstens ein Stickstoffatom enthaltenden identischen oder unterschiedlichen ungesättigten heterocyclischen Gruppen umfassen.

2. Verfahren nach Anspruch 1, dadurch **gekennzeichnet**, daß die Puffer mit neutralem pH ausgewählt werden aus der Gruppe, bestehend aus dem Tris/HCl-Puffer, erhalten aus mit Salzsäure neutralisiertem Tris(hydroxymethyl)aminomethan, dem Hépès-Puffer, erhalten aus N-[2-Hydroxyethyl]piperazin-N'-2-ethansulfonsäure, und dem Phosphatpuffer, erhalten aus Alkalimetallhydrogenphosphaten.

3. Verfahren nach einem der Ansprüche 1 und 2, dadurch **gekennzeichnet**, daß die bevorzugten neutralen Puffer erhalten werden aus Natrium- und Kaliumhydrogenphosphat.

4. Verfahren nach einem der Ansprüche 1 bis 3, dadurch **gekennzeichnet**, daß die heterocyclischen Gruppen Ar und Ar' wenigstens einen zumindest ein Stickstoffatom aufweisenden aromatischen Ring enthalten.

5. Verfahren nach einem der Ansprüche 1 bis 4, dadurch **gekennzeichnet**, daß die aromatischen Ringe in Ar und Ar' wenigstens einen Ring der Gruppe, bestehend aus dem Imidazolyl- und Benzimidazolylring, enthalten.

6. Verfahren nach einem der Ansprüche 1 bis 4, dadurch **gekennzeichnet**, daß die aromatischen Ringe in Ar und Ar' wenigstens einen Ring der Gruppe, bestehend aus Pyridin- und Chinolinring, enthalten.

7. Verfahren nach einem der Ansprüche 1 bis 6, dadurch **gekennzeichnet**, daß jeder Ligand L mit dem Mangan über wenigstens zwei und vorzugsweise vier Stickstoffatome verbunden ist, wobei die einzelnen Stickstoffatome durch eine wenigstens zwei C-Atome aufweisende Kohlenstoffkette voneinander getrennt sind.

8. Verfahren nach einem der Ansprüche 1 bis 4 und 6 bis 7, dadurch **gekennzeichnet**, daß im Liganden der Formel II Ar und Ar' der Formel III 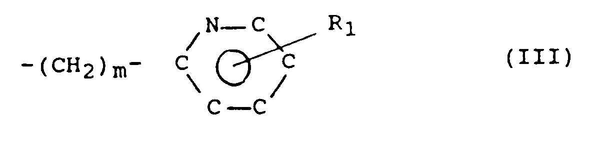 entsprechen, in der m und m' in Ar bzw. Ar' identische oder unterschiedliche ganze Zahlen zwischen 1 und 4 bedeuten und R₁ und R₁', die wenigstens einen Wasserstoff eines der C-Atome jedes Ringes in Ar und Ar' substituieren, ausgewählt sind aus der Gruppe, bestehend aus dem Wasserstoffatom, 1 bis 4 C-Atome aufweisenden Alkylgruppen, 1 bis 6 C-Atome aufweisenden Oxyalkylgruppen, Halogeniden, vorzugsweise Chlor, und Nitrogruppen.

9. Verfahren nach einem der Ansprüche 1 bis 4 und 6 bis 8, dadurch **gekennzeichnet**, daß im Liganden der Formel II n 2 ist und R und R' Methylgruppen sind und in der Formel III von Ar und Ar' m und m' gleich 1 sind und R₁ und R₁' Alkylgruppen mit mehr als zwei C-Atomen sind.

10. Verfahren nach einem der Ansprüche 1 bis 5 und 7, dadurch **gekennzeichnet**, daß im Liganden der Formel I die Gruppen Ar und Ar' wenigstens einer der Formel IV und V 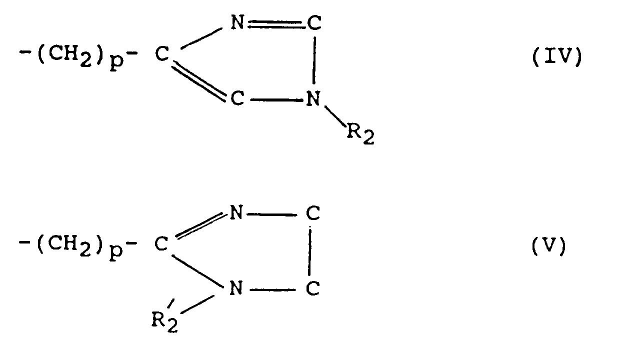 entsprechen, worin p und p' für Ar bzw. Ar' identische oder unterschiedliche ganze Zahlen zwischen 1 und 6 bedeuten und R₂ und R₂' das Wasserstoffatom, eine 1 bis 3 C-Atome aufweisende Alkylgruppe, ein Halogenatom, vorzugsweise ein Chloratom, oder eine Nitrogruppe bedeuten.

11. Verfahren nach einem der Ansprüche 1 bis 5, 7 und 10, dadurch **gekennzeichnet**, daß im Liganden der Formel I n gleich 2 ist, R und R' identisch oder unterschiedlich sind und ein Wasserstoffatom, Methyl oder Ethyl bedeuten und in Ar und Ar' p und p' gleich 1 sind und R₂ und R₂' identisch oder unterschiedlich sind und Wasserstoff oder Methyl bedeuten.

12. Verfahren nach einem der Ansprüche 1 bis 11, dadurch **gekennzeichnet**, daß der Mangankomplex in einer wäßrigen Lösung oder auf einem Träger fixiert hergestellt wird.

13. Verfahren nach einem der Ansprüche 1 bis 12, dadurch **gekennzeichnet**, daß das Verhältnis der Molarkonzentrationen des Mangankomplexes zur Konzentration des Phosphatpuffers unter 1 liegt.

14. Verwendung des Verfahrens nach einem der Ansprüche 1 bis 13 zur Begrenzung von Reaktionen oxidativen Stresses des Organismus auf medikamentösem Wege.

15. Verwendung nach einem der Ansprüche 1 bis 13 zur Begrenzung der Oxidation von Nahrungsmitteln.

16. Verwendung nach einem der Ansprüche 1 bis 13 bei der Behandlung von Wässern mit hohen Konzentrationen an Hydroperoxiden und Wasserstoffperoxiden, insbesondere von Industrieabwässern.
